# DEMANDE DE BREVET EUROPEEN

(11) **EP 4 261 920 A1**
(43) Date de publication de la demande: **18.10.2023**
(21) Numéro de dépôt: 23167358.3
(22) Date de dépôt: 11.04.2023
(51) Int. Cl.: H01M 4/04, H01M 4/134, H01M 4/1395, H01M 4/36, H01M 4/38, H01M 4/62, H01M 10/052

(54) **PROCÉDÉ DE FLUORATION D'UNE SURFACE DE LITHIUM MÉTALLIQUE**

(30) Priorité: 12.04.2022 FR 2203360
(71) Demandeur: Commissariat à l'énergie atomique et aux énergies alternatives, 75015 Paris (FR)
(72) Inventeur: CHAVILLON, Benoit, 38054 Grenoble cedex 09 (FR); LY, Clémence, 38054 Grenoble cedex 09 (FR); Lionel, PICARD, 38054 Grenoble cedex 09 (FR)
(74) Mandataire: Cabinet Nony

(57) **Abrégé**

L'invention concerne un procédé de fluoration d'une surface de lithium métallique comprenant au moins une étape de mise en contact de ladite surface de lithium métallique solide, avec une membrane polymérique, dite membrane polymérique fluorée, formée à partir d'au moins un polymère, dit polymère fluoré, porteur de groupements pendants possédant au moins un cycle aromatique porteur de liaisons C-F labile ; ainsi que l'utilisation de ce procédé pour former une couche protectrice de LiF en surface d'une électrode de lithium métallique, en particulier destinée à former l'anode dans une batterie au lithium.

## Description

### Domaine technique

La présente invention concerne le domaine des batteries au lithium, en particulier de troisième (batteries lithium-ion) ou quatrième génération (batteries tout-solides), et en l'occurrence tout type de batteries au lithium utilisant des électrolytes liquides ou solides. Plus précisément, la présente invention concerne des batteries mettant en oeuvre une électrode négative en lithium métallique. Elle concerne plus particulièrement un procédé pour accéder à la formation d'une couche protectrice en fluorure de lithium (LiF) en surface de l'électrode négative en lithium métal.

### Technique antérieure

Les batteries au lithium sont de plus en plus utilisées comme sources d'énergie autonome, en particulier dans les équipements portables, où ils remplacent progressivement les accumulateurs nickel-cadmium (NiCd) et nickel-hydrure métallique (NiMH). Cette évolution s'explique par l'amélioration continue des performances des accumulateurs au lithium, leur conférant ainsi des densités d'énergie nettement supérieures à celles proposées par les filières NiCd et NiMH. Les batteries au lithium trouvent de multiples applications, notamment dans les nouvelles technologies de l'information et de la communication (NTIC), des dispositifs médicaux, les véhicules électriques, le stockage de l'énergie de cellules photovoltaïques, etc.

Les batteries à base d'ions lithium en tant que dispositifs de stockage d'énergie nécessitent une capacité accrue. En ce qui concerne le choix des électrodes négatives des batteries au lithium, le lithium métallique (Li métal) constitue en théorie un des meilleurs candidats du fait de sa capacité théorique élevée et de son faible potentiel rédox.

Toutefois, la nature hautement réactive du Li métal résulte dans la formation d'une couche de passivation appelée SEI (« Solid Electrolyte Interphase » en terminologie anglo-saxonne) instable formée sur la surface de l'électrode négative (anode) en Li métal par réaction du métal Li et de l'électrolyte, ce qui entrave ses performances comme anode pour les batteries au lithium.

Plus particulièrement, pendant la charge/décharge, l'électrode négative en Li métal utilise un mécanisme de lithiation/dé-lithiation à sa surface. Pendant ce procédé et du fait de la haute réactivité du lithium, une interface instable se forme et s'effondre à plusieurs reprises sur sa surface, et s'accompagne d'une consommation d'électrolyte et d'une expansion dimensionnelle importante, ce qui dégrade les propriétés de l'anode. Ainsi, au cours de l'évolution du cycle, l'apparition continue de cette couche interfaciale indésirable amène des défauts de cyclage, en particulier l'accumulation d'une couche électrochimique inactive, la croissance de dendrites ou la création de mousse de lithium en re-lithiation, pouvant conduire à une détérioration des caractéristiques de cyclage de l'anode de Li métal, voire jusqu'à provoquer un court-circuit de la batterie.

En vue de pallier ces inconvénients, des études ont déjà porté sur la mise en oeuvre d'une couche de LiF en surface d'une électrode en Li métal à des fins d'obtenir de meilleures performances de cyclage, dans des essais de batteries symétriques (constituées de deux électrodes de Li métal identiques), de batteries lithium-soufre (Li-S) ou lithium-air (Li-air). A titre d'exemple, on peut citer la publication de Dingchang Lin *et al.* [1] qui propose la formation d'une couche de LiF en surface du lithium métallique *via* la réaction d'un gaz, le Fréon R134a (1,1,1,2-tétrafluoroéthane) avec le lithium métal. Après interaction entre le gaz et le lithium, une analyse XPS permet d'identifier des traces en surface de LiF, qui disparaissent après abrasion de cette surface. Le revêtement de LiF permet d'accéder à une stabilité des batteries en cyclage élevée, avec une capacité très stable, contrairement à celle obtenue à partir d'électrodes en lithium métal pur.

Diverses méthodes alternatives ont également été proposées pour opérer le dépôt par voie physique de LiF sur du lithium. On peut citer la méthode proposée dans le document US 2021/0036320 pour former une couche protectrice de LiF à la surface d'une anode de lithium métal, comprenant l'immersion, sous atmosphère sèche de gaz protecteur, de l'anode de lithium métallique dans un liquide ionique contenant du fluor ou l'étalement du liquide ionique contenant du fluor sur la surface de l'anode de lithium métal.

D'autres techniques pour accéder à une couche protectrice du lithium métallique ont encore été décrites. Ainsi, par exemple, le document US 9,073,120 propose une méthode de préparation de lithium métallique passivé en surface, dans lequel le lithium métallique, sous forme de poudre, est traité avec un agent de passivation de type Li[P(C₂O₄)₃₋ₓFₓ avec x=0, 2 ou 4, en particulier avec du tris(oxalate)phosphate de lithium, en solvant aprotique polaire, à des températures comprises entre 100 et 175 °C.

Le document EP 2 246 134 propose par ailleurs une méthode de passivation d'une poudre de lithium métallique, comprenant le chauffage du lithium à une température au-delà de son point de fusion dans une huile hydrocarbonée, et la fluoration à l'aide de gaz fluorés, de perfluorocarbones ou de composés inorganiques fluorés.

Dans la publication Feihong Ren *et al.* [2], la méthode de protection du lithium métal implique le traitement de nanoparticules carbonées pour former des agglomérats carbonés à liaisons -CFₓ, qui servent de structure hôte pour le lithium métal. Cette méthode, bien que permettant, au cours du cyclage, de générer une couche de passivation à base de LiF, est très énergivore. Cette technique est également employée dans la publication de Yong Jun Gong *et al.* [3], à partir de graphène partiellement fluoré, qui induit la formation de LiF pendant le cyclage.

On peut encore citer la méthode de fluoration de surface mise en oeuvre dans la publication de Jie Zhao *et al.* [4], dans laquelle du gaz fluor est généré *in situ* dans une chambre à partir de précurseurs de type fluoropolymères, et réagit avec une surface de lithium métal positionnée au-dessus de la chambre. Cette technique est là encore très énergivore et complexe, et met par ailleurs en oeuvre des gaz fluorés hautement toxiques.

Dans une autre alternative de mise en oeuvre développée par Jung-Hun Lee *et al.* [5], la fluoration est opérée *in situ via* l'utilisation d'un séparateur biphasique en cellulose/PVDH-HFP (poly(vinylidène fluoride-*co*-hexafluoropropylène)). Par contact avec l'électrode de lithium métal au sein de la cellule, une phase riche en LiF est produite en surface et conduit à une amélioration de la stabilité en cyclage. La réaction conduisant à la formation de LiF produit toutefois également des groupements OH qui sont susceptibles de générer des espèces indésirables.

Enfin, on peut encore citer, comme autre technique proposée pour former une couche protectrice de LiF en surface du lithium, l'application au niveau de la surface de lithium métal d'une membrane, préalablement formée, riche en LiF, et associant des agents conducteurs et des liants [6]. Là encore, cette technique est complexe puisqu'elle requiert la préparation au préalable d'une membrane spécifique.

Ainsi, d'une manière générale, les méthodes proposées jusqu'à présent pour former une couche protectrice au niveau d'une électrode de Li métal nécessitent des montages particulièrement complexes, sont couteuses à mettre en oeuvre, ou encore utilisent des produits toxiques. En tout état de cause, de telles méthodes sont difficilement transposables pour une production à l'échelle industrielle.

Il demeure donc un besoin de disposer d'une méthode, aisée à mettre en oeuvre, peu coûteuse en termes de matériel et de conditions, permettant de protéger de manière efficace une électrode de Li métal des différents mécanismes de dégradation pouvant intervenir au cours du cyclage de la batterie au lithium à base d'une telle électrode de Li métal.

### Résumé de l'invention

La présente invention vise précisément à proposer un nouveau moyen pour opérer, de manière aisée et peu coûteuse, la fluoration d'une surface de lithium métallique et, en particulier, pour accéder à une couche protectrice de LiF en surface d'une électrode de lithium métallique destinée à former l'anode dans une batterie au lithium.

Ainsi, l'invention concerne, selon un premier de ses aspects, un procédé de fluoration d'une surface de lithium métallique (ou « Li métal ») solide, comprenant au moins une étape de mise en contact de ladite surface de lithium métallique solide, avec une membrane polymérique formée à partir d'au moins un polymère porteur de groupements pendants possédant au moins un cycle aromatique porteur de liaisons C-F labiles.

Comme détaillé dans la suite du texte, le procédé de fluoration selon l'invention peut comprendre plus particulièrement les étapes consistant en :
(1) disposer d'un substrat présentant, au niveau d'au moins l'une de ses faces, une couche de Li métal solide ;
(2) mettre en contact la surface de ladite couche de Li métal solide avec une membrane polymérique formée à partir d'au moins un polymère porteur de groupements pendants possédant au moins un cycle aromatique porteur de liaisons C-F labiles, pendant une durée suffisante à la formation, sur ladite surface, de LiF ; et
(3) ultérieurement à l'étape (2), éliminer la membrane polymérique résiduelle de la surface traitée, en particulier par simple décollement de la membrane polymérique résiduelle.

Au sens de la présente invention, on entend par fluoration, la formation de LiF au niveau de la surface de lithium métallique traitée selon le procédé de l'invention.

Ainsi, le procédé revendiqué est un procédé de formation de LiF au niveau d'une surface de Li métal solide, comprenant au moins une étape de mise en contact de ladite surface de lithium métallique solide, avec une membrane polymérique formée à partir d'au moins un polymère porteur de groupements pendants possédant au moins un cycle aromatique porteur de liaisons C-F labiles.

Comme détaillé dans la suite du texte, la membrane polymérique mise en oeuvre selon le procédé de l'invention comprend, voire est constituée d'au moins un polymère porteur de groupements pendants possédant au moins un cycle aromatique porteur de liaisons C-F labiles. Ledit polymère peut être plus particulièrement porteur de groupements pendants comprenant un groupe polyfluorophényle, de préférence un groupe perfluorophényle.

Des exemples de tels polymères sont décrits plus précisément dans la suite du texte.

Selon un mode de réalisation particulier, la membrane polymérique est formée à partir de poly(2,3,4,5,6-pentafluorostyrène) (PPFS).

Des monomères organiques perfluorés et autres molécules perfluorées ont déjà été proposés dans le domaine des batteries, mais pour des usages différents de celui considéré selon l'invention.

Par exemple, le PFS a été décrit en tant qu'additif de l'électrolyte à des fins de stabiliser une électrode de graphite [7]. Ainsi, cet usage est très différent de celui de la présente invention, où un contact direct et temporaire est opéré entre le lithium métal et une membrane polymérique fluorée, par exemple une membrane formée à partir de PPFS, afin de générer du LiF.

On peut encore citer la publication de Kavan *et al.* [8] qui propose de faire réagir en phase gazeuse de l'hexafluorobenzène et du tétradécafluorohexane avec un amalgame de lithium pour former un mélange solide et intime contenant du fluorure de lithium et un matériau carboné conducteur électronique. Cette réaction n'est nullement proposée pour former une couche protectrice de LiF en surface d'une anode de Li métal. En tout état de cause, cette réaction très forte ne permet pas de former une couche fine de LiF en surface de lithium métal, et est donc inappropriée pour stabiliser une électrode de lithium métal au cours du cyclage d'une batterie au lithium.

Comme illustré dans les exemples qui suivent, les inventeurs ont montré qu'il est possible d'accéder à la formation de LiF en surface de Li métal, en mettant directement et temporairement la surface de lithium métallique solide, en contact avec une membrane polymérique formée à partir d'au moins un polymère porteur de groupements pendants possédant au moins un cycle aromatique porteur de liaisons C-F labiles. Avantageusement, à la différence des méthodes déjà proposées pour générer une couche protectrice de LiF, le procédé de l'invention ne nécessite aucune mise en oeuvre particulière du lithium métal. En particulier, il ne requiert pas de mettre en oeuvre le lithium métal sous forme particulaire.

Également, le procédé de fluoration selon l'invention peut être mis en oeuvre au niveau de tout type de surface de Li métal solide, par exemple sur du Li métal supporté par du cuivre, ou encore sur un substrat de Li métal seul, autrement au niveau d'un substrat autosupporté de Li métal.

Le procédé de fluoration est également adapté au traitement de fluoration d'une unique face de Li métal d'un substrat ou des deux faces de Li métal d'un substrat, en particulier de manière simultanée.

Avantageusement, le traitement de fluoration selon l'invention est opéré directement sur la surface de lithium métallique à l'état solide, et ne requiert par conséquent aucune étape de traitement thermique du lithium métallique pour l'amener, par exemple, à l'état fondu. Avantageusement, le procédé de l'invention est mis en oeuvre pour la formation d'une couche de LiF à la surface du lithium métallique, en particulier d'épaisseur comprise entre 1 nm et 3 µm, en particulier entre 1 nm et 200 nm.

De manière avantageuse, le procédé de l'invention peut être mis en oeuvre directement pour traiter une électrode de lithium métallique, en particulier destinée à former l'électrode négative (anode) dans une batterie au lithium.

L'invention concerne ainsi, selon un autre de ses aspects, l'utilisation du procédé de fluoration selon l'invention, pour former une couche protectrice de LiF en surface d'une électrode de lithium métallique, en particulier destinée à former l'anode dans une batterie au lithium, en particulier dans une batterie lithium-métal, lithium-soufre ou lithium-air.

Ainsi, l'invention concerne encore un procédé de formation d'une couche protectrice de LiF en surface d'une électrode de lithium métallique destinée à une batterie au lithium, comprenant au moins les étapes consistant en :
(1) disposer d'une électrode de lithium métallique ;
(2) mettre en contact la surface de lithium métal solide d'au moins l'une des faces de ladite électrode avec au moins une membrane polymérique formée à partir d'au moins un polymère porteur de groupements pendants possédant au moins un cycle aromatique porteur de liaisons C-F labiles, pendant une durée suffisante à la formation sur ladite surface de LiF ; et
(3) ultérieurement à l'étape (2), éliminer la membrane polymérique résiduelle de la surface traitée, en particulier par simple décollement de la membrane polymérique résiduelle.

Avantageusement, le procédé de l'invention ne requiert pas, à la différence de nombreuses méthodes déjà proposées pour la protection d'électrodes de lithium métal, telles qu'évoquées précédemment, d'équipements particuliers, ni de chauffage à de hautes températures. Le procédé de l'invention est ainsi aisé à mettre en oeuvre, et s'avère avantageux en termes de coût, tant au niveau du matériel que des conditions de mise en oeuvre.

De manière avantageuse, le procédé de l'invention peut être aisément transposable pour une production à échelle industrielle.

Avantageusement, le procédé de l'invention permet de former une couche de LiF protectrice de la surface de l'électrode de lithium métallique, sans contrevenir au fonctionnement de la batterie.

La couche de LiF protectrice en surface du lithium métallique est en particulier fine et dense. La couche de LiF formée en surface d'une électrode de lithium métallique s'avère particulièrement avantageuse pour améliorer les performances en cyclage de la batterie au lithium formée à partir de l'électrode de lithium métallique.

Comme détaillé dans la suite du texte, une électrode de lithium métallique présentant une couche protectrice de LiF formée selon l'invention peut trouver des applications dans diverses batteries au lithium métal, mettant en oeuvre tout type d'électrolyte, liquide ou solide, notamment dans les prochaines générations de batteries au lithium-soufre et lithium-air.

D'autres caractéristiques, variantes et avantages du procédé de fluoration de la surface de lithium métallique selon l'invention, et de l'électrode protégée par une couche protectrice de LiF ainsi obtenue, ressortiront mieux à la lecture de la description, des exemples et figures qui vont suivre, donnés à titre illustratif et non limitatif de l'invention.

Dans la suite du texte, les expressions « compris entre ... et ... », « allant de ... à ... » et « variant de ... à ... » sont équivalentes et entendent signifier que les bornes sont incluses, sauf mention contraire.

### Brève description des dessins

[Fig 1] est une photographie des échantillons pressés sous des poids (figure 1-a), et des échantillons obtenus en exemple 1 avant retrait de la membrane de PPFS (figure 1-b) ;
[Fig 2] présente le spectre XPS de survol (figure 2-a) et les spectres XPS de C1s, Lils, O1s et F1s (figure 2-b) obtenus par analyse d'une zone localisée de la surface de l'électrode de lithium métallique à l'issue du traitement de fluoration décrit en exemple 1 ;
[Fig 3] présente le spectre XPS de survol (figure 3-a) et les spectres XPS de C1s, Lils, O1s et F1s (figure 3-b) obtenus par analyse d'une zone distincte de la surface de l'électrode de lithium métallique à l'issue du traitement de fluoration décrit en exemple 1 ;
[Fig 4] présente les diagrammes de Nyquist (Im(Z) en fonction de Re(Z)), obtenus par spectroscopie d'impédance pour des piles boutons symétrique Li⁰/électrolyte/Li⁰ fabriquées à partir des électrodes de lithium métallique ayant été soumises au traitement de fluoration selon l'invention (« LiF sur Li ») et pour des boutons symétrique Li⁰/électrolyte/Li⁰ fabriquées à partir des électrodes de lithium métallique sans traitement de fluoration (« Li 20 µm ») comme décrit en exemple 2 ;
[Fig 5] présente l'évolution du potentiel moyen des plateaux de charge/décharge en fonction du nombre de cycles effectués pour une pile bouton symétrique Li⁰/électrolyte/Li⁰, mettant en oeuvre deux électrodes en lithium métallique ayant été soumises au traitement de fluoration selon l'invention, pour un cyclage opéré avec une densité de courant de 0,3 mA/cm² et une capacité de 1 mAh/cm², comme décrit en exemple 2.

### Description détaillée

### MEMBRANE POLYMERIQUE FLUOREE

Comme indiqué précédemment, le procédé de l'invention fait intervenir la mise en contact directe du lithium métal avec une membrane polymérique formée à partir d'au moins un polymère porteur de groupements pendants possédant au moins un cycle aromatique porteur de liaisons C-F labiles, notées également liaisons « C_{Ar}-F ».

Par l'expression « groupe pendant », on entend, au sens de la présente invention, un groupement latéral, de la chaîne principale du polymère. On utilisera indifféremment les termes « latéral » ou « pendant ». Un groupement latéral n'est pas intégré dans la chaîne principale du polymère.

De préférence, la chaîne principale du polymère porteur desdits groupements pendants est une chaîne hydrocarbonée, autrement dit formée d'atomes de carbone et d'hydrogène.

Le cycle aromatique des groupements pendants est porteur d'au moins deux liaisons C_{Ar}-F labiles, de préférence d'au moins trois liaisons C_{Ar}-F labiles, encore plus préférentiellement d'au moins quatre liaisons C_{Ar}-F labiles, par exemple de cinq liaisons C_{Ar}-F labiles.

Par « labile », on entend une liaison « C_{Ar}-F », autrement dit une liaison entre un atome de carbone du cycle aromatique et un atome de fluor, apte à se rompre sous l'action du lithium métal Li⁰ agissant comme donneur d'électron, pour former du fluorure de lithium (LiF). On désigne plus simplement dans la suite du texte, les groupements pendants possédant au moins un cycle aromatique porteur de liaisons C-F labiles, sous l'appellation « groupements pendants aromatiques polyfluorés ».

Par « polyfluoré », on entend ainsi désigner le fait que le cycle aromatique du groupement pendant dudit polymère (ou le groupement pendant) est porteur d'au moins deux atomes de fluor.

La membrane polymérique mise en oeuvre selon l'invention sera plus simplement désignée dans la suite du texte sous l'appellation « membrane polymérique fluorée ».

### Polymère porteur des groupements pendants aromatiques polyfluorés

Dans la présente description, en l'absence d'indications contraires, le terme « polymère » sera utilisé pour désigner, au sens large, aussi bien des homopolymères que des copolymères. Par « copolymère », on entend un polymère dérivé d'au moins deux espèces différentes de monomères.

Par « unité monomérique », on entend dans le cadre de la présente invention la plus petite unité constitutive dont la répétition conduit à une chaîne polymérique.

On désigne également plus simplement, dans la suite du texte, un polymère présentant des groupements pendants possédant au moins un cycle aromatique porteur de liaisons C_{Ar}-F labiles, tel que mis en oeuvre pour former ladite membrane polymérique fluorée, sous l'appellation « polymère fluoré ».

Un groupement pendant peut comprendre plus particulièrement, voire être formé par, un groupe aryle partiellement fluoré ou perfluoré.

Par « perfluoré », on entend désigner un groupement (par exemple, aryle), où l'ensemble des atomes d'hydrogène ont été substitués par des atomes de fluor.

Par « partiellement fluoré », on entend désigner un groupement (par exemple, aryle), où seule une partie des atomes d'hydrogène (un ou plusieurs atomes d'hydrogène) ont été substitués par des atomes de fluor.

De préférence, le polymère fluoré est porteur de groupements pendants possédant au moins un groupe aryle perfluoré, en particulier un groupe phényle perfluoré.

Lesdits groupes aryles partiellement fluorés ou perfluorés peuvent notamment être liés à la chaîne principale du polymère fluoré par l'intermédiaire d'une liaison covalente, d'une chaîne alkylène, éventuellement fluorée, d'une liaison amide (-C(O)-NH-) ou ester (-C(O)-O-), ou encore d'une liaison -Ar-C(O)-NH- ou -Ar-C(O)-O- avec Ar représentant un cycle aromatique, en particulier benzénique.

De préférence, la chaîne principale du polymère fluoré est une chaîne hydrocarbonée.

Dans le cadre de l'invention, on entend par :
- « C_{t-z} » où t et z sont des entiers, une chaîne carbonée pouvant avoir de t à z atomes de carbone ; par exemple C₁₋₄ une chaîne carbonée qui peut avoir de 1 à 4 atomes de carbone ;
- « alkyle », un groupe aliphatique saturé, linéaire ou ramifié ; par exemple un groupe C₁₋₄-alkyle représente une chaîne carbonée de 1 à 4 atomes de carbone, linéaire ou ramifiée, plus particulièrement un méthyle, éthyle, propyle, isopropyle, butyle, isobutyle, tert-butyle ;
- « alkylène », un radical divalent saturé, linéaire ou ramifié, dérivé d'un alkyle. Par exemple un groupe C₁-C₃-alkylène représente une chaîne carbonée saturée, linéaire ou ramifiée, de 1 à 3 atomes de carbone, par exemple un méthylène, éthylène, 1-méthyléthylène ou propylène ;

- « aryle », un groupe monocyclique ou polycyclique aromatique, comportant plus particulièrement de 4 à 14 atomes de carbone, de préférence de 4 à 9 atomes de carbones. De préférence, il s'agit d'un groupe phényle.
- « groupement polycyclique », un groupement présentant deux ou plusieurs noyaux (cycles), condensés (ortho-condensés ou ortho- et péri-condensés) les uns aux autres, c'est-à-dire présentant, deux à deux, au moins deux carbones en commun.
- « alcoxy », un radical alkyle lié à un atome d'oxygène.

Selon un mode de réalisation particulier, ledit polymère fluoré selon l'invention peut comprendre, voire être formé, des unités monomériques de formule (I) suivante : 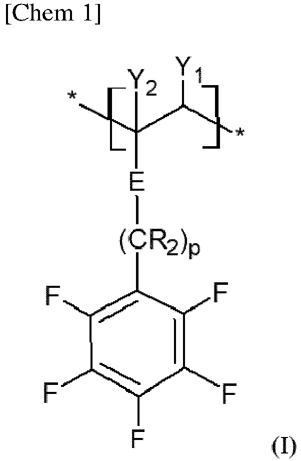 dans laquelle :
Y₁ et Y₂ représentent, indépendamment l'un de l'autre, un atome d'hydrogène ou un groupe C₁-C₄-alkyl, en particulier méthyle ;
E représente une liaison covalente ou un radical hydrocarboné, saturé ou insaturé, linéaire, ramifié ou cyclique, aromatique ou non, comprenant éventuellement un ou plusieurs atomes d'oxygène et/ou d'azote, ayant de préférence de 2 à 6 chainons ;
R représentent, indépendamment les uns des autres, un atome d'hydrogène ou un atome de fluor, de préférence des atomes d'hydrogène, et
p vaut 0 ou est un entier compris entre 1 et 4.

Dans un mode de réalisation particulier, E dans la formule (I) précitée représente une liaison covalente.

Dans un autre mode de réalisation particulier, E dans la formule (I) précitée comprend, voire est formé, d'une liaison ester (-C(O)-O-) ou amide (-C(O)-NH-).

De préférence, E dans la formule (I) précitée est choisi parmi :
- une liaison covalente ;
- une liaison ester (-C(O)-O-) ou amide (-C(O)-NH-), en particulier une liaison ∘-C(=O)-O-□ ou ∘-C(=O)-NH-□, avec o représentant la liaison à la chaîne principale et □ la liaison au cycle benzénique ou au radical -(CR₂)ₚ- ; et
- un radical ∘-Ar-C(=O)-O-□ ou ∘-Ar-C(=O)-NH-□, avec Ar représentant un cycle aromatique, en particulier benzénique, o représentant la liaison à la chaîne principale et □ la liaison au cycle benzénique ou au radical -(CR₂)ₚ-.

De préférence, p dans la formule (I) précitée vaut 0.

De préférence, Y₁ dans la formule (I) précitée représente un atome d'hydrogène.

De préférence, Y₂ dans la formule (I) précitée représente un atome d'hydrogène ou un groupe méthyle, en particulier un atome d'hydrogène.

Il est entendu que les modes particuliers ou préférés définis pour chacun des substituants peuvent être combinés, dans la mesure du possible, pour définir d'autres modes de réalisation particuliers.

Dans un mode de réalisation particulier, E représente une liaison covalente, et p vaut 0 ou est un entier compris entre 1 et 4, en particulier p vaut 0 ou 1.

Dans une variante de réalisation, ledit polymère fluoré selon l'invention peut comprendre, voire être formé, d'unités monomériques de formule (I) dans laquelle E représente une liaison covalente et p vaut 0.

En particulier, ledit polymère fluoré selon l'invention peut comprendre, voire être formé, d'unités monomériques de formule (I) dans laquelle Y₁ représente un atome d'hydrogène ; Y₂ représente un atome d'hydrogène ou un groupe méthyle, en particulier un atome d'hydrogène, E représente une liaison covalente et p vaut 0.

Dans une autre variante de réalisation, ledit polymère fluoré selon l'invention peut comprendre, voire être formé, d'unités monomériques de formule (I) dans laquelle E représente une liaison covalente, p vaut 1 et R représentent des atomes d'hydrogène (autrement dit, le radical -(CR₂)ₚ- représente un radical méthylène -CH₂-).

En particulier, ledit polymère fluoré selon l'invention peut comprendre, voire être formé, d'unités monomériques de formule (I) dans laquelle Y₁ représente un atome d'hydrogène ; Y₂ représente un atome d'hydrogène ou un groupe méthyle, en particulier un atome d'hydrogène ; E représente une liaison covalente et le radical -(CR₂)ₚ- représente un radical méthylène.

Selon un mode de réalisation particulier, le ou lesdits polymères fluorés de la membrane polymérique fluorée selon l'invention sont formés à partir de monomères choisis parmi le 1-éthényl-2,3,4,5,6-pentafluorobenzène, encore appelé plus couramment 2,3,4,5,6-pentafluorostyrène (PFS) ; l'alpha-methyl-2,3,4,5,6-pentafluorostyrène (dit encore 1,2,3,4,5-pentafluoro-6-(prop-1-en-2-yl)benzène) ; le 1-allyl-2,3,4,5,6-pentafluorobenzène (dit encore 1,2,3,4,5-pentafluoro-6-prop-2-énylbenzène) ; le pentafluorophényl acrylate (dit encore (2,3,4,5,6-pentafluorophényl)prop-2-énoate) ; le pentafluorophényl méthacrylate (dit encore (2,3,4,5,6-pentafluorophényl) 2-méthylprop-2-énoate), le pentafluorophényl 4-vinylbenzoate (2,3,4,5,6-pentafluorophényl) 4-éthénylbenzoate) ; et leurs mélanges.

De préférence, le ou lesdits polymères fluorés de la membrane polymérique fluorée selon l'invention sont des homopolymères.

Dans un mode de réalisation particulier, le ou lesdits polymères fluorés de la membrane polymérique fluorée selon l'invention sont choisis parmi le poly(2,3,4,5,6-pentafluorostyrène), noté PPFS ; le poly(alpha-methyl-2,3,4,5,6-pentafluorostyrène ), le poly(1-allyl-2,3,4,5,6-pentafluorobenzène) ; le poly(pentafluorophényl acrylate) ; le poly(pentafluorophényl méthacrylate), le poly(pentafluorophényl 4-vinylbenzoate) ; et leurs mélanges.

De préférence, le ou lesdits polymères fluorés de la membrane polymérique fluorée selon l'invention sont choisis parmi le poly(2,3,4,5,6-pentafluorostyrène), le poly(alpha-methyl-2,3,4,5,6-pentafluorostyrène ), le poly(1-allyl-2,3,4,5,6-pentafluorobenzène) et leurs mélanges.

De préférence, la membrane polymérique fluorée selon l'invention est formée à partir de PPFS.

Les polymères fluorés selon l'invention peuvent être disponibles dans le commerce ou préparées, préalablement à la mise en oeuvre du procédé de l'invention, par des méthodes de synthèse connues de l'homme du métier.

Selon un mode de réalisation particulier, le polymère fluoré de la membrane polymérique fluorée selon l'invention possède une masse molaire strictement supérieure à la masse molaire critique d'enchevêtrement dudit polymère, afin que la membrane (ou film) polymérique soit mécaniquement utilisable.

En particulier, le ou lesdits polymères fluorés de la membrane polymérique fluorée selon l'invention peuvent présenter une masse moléculaire moyenne en nombre Mₙ comprise entre 20 000 g.mol⁻¹ et 500 000 g.mol⁻¹, de préférence entre 45 000 g.mol⁻¹ et 150 000 g.mol⁻¹, et plus préférentiellement comprise entre 60 000 g.mol⁻¹ et 120 000 g.mol⁻¹.

En particulier, le ou lesdits polymères fluorés de la membrane polymérique fluorée selon l'invention peuvent présenter une dispersité en masse D_{w} comprise entre 1,2 et 3, de préférence comprise entre 1,3 et 2.

La dispersité en masse D_{w} peut être calculée à partir de l'équation D_{w} = M_{w}/Mₙ avec M_{w} représentant la masse moléculaire moyenne en poids, et Mₙ représentant la masse moléculaire moyenne en nombre.

Les masses moléculaires moyennes en nombre Mₙ et en poids M_{w} peuvent notamment être déterminées par Chromatographie d'Exclusion Stérique (CES).

Selon un mode de réalisation particulier, le ou lesdits polymères fluorés de la membrane polymérique fluorée selon l'invention peuvent présenter un degré de polymérisation moyen en nombre, correspondant au nombre d'unités monomériques, en particulier de formule (I) telle que définie précédemment, constitutives dudit polymère fluoré, supérieur ou égal à 100, en particulier compris entre 200 et 2 600 et plus particulièrement compris entre 300 et 600.

### Membrane polymérique fluorée

Il est entendu que la membrane polymérique fluorée mise en oeuvre dans le procédé de l'invention peut être formée à partir d'un unique polymère fluoré, ou d'au moins deux polymères fluorés distincts, tels que décrits précédemment.

De préférence, la membrane polymérique fluorée est constituée d'un ou plusieurs polymères fluorés selon l'invention, en particulier tels que décrits précédemment.

A titre d'exemple, la membrane polymérique fluorée mise en oeuvre dans le procédé de l'invention est une membrane constituée de PPFS.

En particulier, la membrane polymérique fluorée mise en oeuvre dans le procédé de l'invention ne comprend pas de LiF, celui-ci étant généré uniquement par la mise en contact de ladite membrane polymérique fluorée avec le lithium métal.

La membrane polymérique fluorée peut être supportée par un substrat, en particulier un substrat en matière plastique, par exemple en polytétrafluroéthylène (PTFE), en polytéréphtalate d'éthylène (PET), de préférence en PET.

Le substrat se présente de préférence sous la forme d'un film en matière plastique.

La membrane polymérique fluorée peut être préparée à partir d'un ou plusieurs polymères fluorés, préalablement à la mise en oeuvre du procédé selon l'invention, par toute technique connue de l'homme du métier. En particulier, elle est préparée en surface d'un substrat tel que défini précédemment.

Dans une variante de réalisation, la préparation de la membrane polymérique fluorée fait intervenir au moins les étapes suivantes :
(i) disposer d'une solution du ou desdits polymères fluorés dans un ou plusieurs solvants organiques, de préférence choisis parmi le fluorobenzène et le tétrahydrofurane ;
(ii) déposer ladite solution de l'étape (i) en surface d'un substrat, en particulier un film en matière plastique, par exemple un film de PET, et
(iii) évaporer le ou lesdits solvants dans des conditions propices à la formation d'une membrane solide sèche.

La solution du ou desdits polymères fluorés en étape (i) est de préférence préparée dans des conditions permettant une bonne solubilisation du ou desdits polymères fluorées et une bonne homogénéité de la solution. De préférence, la solution est mélangée et chauffée à une température comprise entre 50 et 80 °C. De préférence, la solution comprend de 5 % à 50 % massique, en particulier de 5 à 20 % massique et plus particulièrement d'environ 10 % massique, de polymère(s) fluoré(s).

La solution en étape (ii) peut être par exemple déposée par enduction, en particulier à l'aide d'une racle.

De préférence, elle est déposée sous la forme d'une couche d'épaisseur uniforme, en particulier d'épaisseur comprise entre 10 et 300 µm.

L'évaporation en étape (iii) du ou des solvants de la couche déposée peut faire intervenir un séchage de ladite couche à température ambiante, suivie d'un traitement thermique à une température comprise entre 40 °C et 70 °C. L'étape de traitement thermique peut être opérée éventuellement sous vide, afin d'accélérer le séchage.

La durée du traitement thermique peut être par exemple supérieure à 30 minutes, par exemple d'environ 1 heure.

Par « sèche », on entend signifier que la membrane polymérique comprend moins de 2 % massique de solvant, en particulier moins de 1 % massique et plus particulièrement moins de 0,1 % massique de solvant, de préférence moins de 0,01 % massique de solvant.

Bien entendu, d'autres méthodes de préparation de la membrane polymérique fluorée peuvent être mises en oeuvre.

De préférence, la membrane polymérique fluorée mise en oeuvre dans le procédé de l'invention présente une épaisseur uniforme.

En particulier, elle peut présenter une épaisseur comprise entre 10 µm et 300 µm, notamment entre 50 µm et 150 µm.

De préférence, la membrane polymérique présente des dimensions, en largeur et en longueur, ajustées au regard des dimensions de la surface de lithium métallique solide à traiter.

En particulier, les dimensions de la membrane polymérique sont au moins égales à celles de la surface de lithium métallique solide à traiter, afin qu'à la mise en contact de ladite membrane avec la surface de lithium métallique, toute la surface de lithium métal solide à traiter soit recouverte par ladite membrane.

### FLUORATION DU Li METAL

Comme indiqué précédemment, le procédé de fluoration selon l'invention repose sur une étape de mise en contact de la surface de lithium métallique solide avec ladite membrane polymérique fluorée, en particulier telle que définie précédemment.

Plus particulièrement, le procédé de fluoration peut être opéré *via* au moins les étapes suivantes :
(1) disposer d'un substrat présentant, au niveau d'au moins l'une de ses faces, une couche de Li métal solide ;
(2) mettre en contact la surface de Li métal solide avec une membrane polymérique formée à partir d'au moins un polymère porteur de groupements pendants possédant au moins un cycle aromatique porteur de liaisons C-F labiles, pendant une durée suffisante à la formation sur ladite surface de LiF ; et
(3) ultérieurement à l'étape (2), éliminer la membrane polymérique résiduelle de la surface traitée.

Le procédé de l'invention peut avantageusement être mis en oeuvre directement au niveau d'une électrode de lithium métallique, en particulier destinée à être utilisée en tant qu'anode dans une batterie au lithium-métal. Autrement dit, le substrat en étape (1) peut être une électrode de lithium métallique, éventuellement accolée à un collecteur de courant, en particulier en cuivre.

Une telle électrode de lithium métallique peut être formée (constituée) de lithium métal ou d'un alliage à base de lithium métallique, en particulier choisi parmi les alliages, notamment binaires ou ternaires, comprenant au moins 90% atomique de lithium, associé par exemple avec du zinc (Zn), de l'aluminium (Al), du magnésium (Mg), du calcium (Ca), du baryum (Ba), de l'indium (In), etc. ou un de leurs mélanges.

Il est entendu que le traitement de fluoration selon l'invention est opéré au moins au niveau de la face de ladite électrode de lithium métallique destinée à être mise au contact, au sein de la batterie au lithium-métal, avec l'électrolyte.

Selon un mode de réalisation particulier, l'électrode de lithium métallique mise en oeuvre en étape (1) du procédé de l'invention peut être accolée à un collecteur de courant, en particulier en cuivre.

Dans ce cas, le traitement de fluoration selon l'invention est opéré au niveau de la face de l'électrode de lithium métallique opposée au collecteur de courant.

La surface de lithium métal solide destinée à être mise au contact avec ladite membrane polymérique peut être éventuellement soumise à une ou plusieurs étapes de pré-traitement préalables. Un traitement préalable de la surface de lithium n'est cependant pas nécessaire, le procédé de l'invention permettant une fluoration de la surface de Li métal, quel que soit l'état de surface du lithium.

Comme indiqué précédemment, la formation de LiF à la surface du Li métal solide est générée par mise en contact avec ladite membrane polymérique fluorée selon l'invention.

Avantageusement, cette étape de mise en contact peut être opérée avec une membrane polymérique fluorée supportée par un substrat, notamment tel que défini précédemment, par exemple par un film en plastique (par exemple, en PET). Il est entendu que ladite membrane polymérique fluorée est positionnée de sorte à ce que la face de ladite membrane opposée au substrat soit en contact direct (autrement dit, soit accolée) à ladite surface de Li métal solide.

De préférence, cette étape de mise en contact est opérée en appliquant une pression sur au moins la face externe de la membrane polymérique fluorée (autrement dit, au niveau de la face opposée à la face en contact avec la couche de lithium métal solide).

L'application d'une telle pression permet de favoriser/ d'améliorer la mise en contact entre la surface de lithium métal solide et la surface de la membrane polymérique. Elle permet avantageusement de générer davantage et plus rapidement, du LiF en surface du lithium métal solide.

Cette force de pression peut être appliquée par un moyen mécanique, par exemple *via* des poids positionnés sur la face externe de la membrane polymérique fluorée ou encore par pressage de l'ensemble formé du substrat présentant ladite couche de Li métal solide et de la membrane polymérique fluorée accolée, le cas échéant supportée par un substrat tel qu'un film en matière plastique.

Ainsi, elle peut être appliquée sur les deux faces externes de l'ensemble formé du substrat présentant ladite couche de Li métal solide et de la membrane polymérique fluorée accolée, le cas échéant supportée par un substrat, en particulier par un film en matière plastique. Par exemple, une telle force de pression peut être appliquée par pressage, par exemple en comprimant l'ensemble à l'aide d'une presse.

Par exemple, l'étape de mise contact pour la formation de LiF en surface d'une électrode de lithium métallique peut comprendre l'application d'une pression sur la face externe du substrat, notamment du film plastique, supportant la membrane polymérique fluorée mise en contact de la surface de Li solide de l'électrode de lithium métal et, éventuellement, sur la face externe de ladite électrode de lithium métal ou du collecteur de courant supportant ladite électrode de lithium métal.

La pression appliquée peut être comprise entre 1 et 10 bar (soit entre 1.10⁵ N/m² et 10⁶ N/m²), en particulier d'environ 2 bar (2.10⁵ N/m²).

La mise en contact entre la surface de lithium métallique solide et la membrane polymérique fluorée est opérée pendant une durée suffisante pour générer du LiF au niveau de la surface de lithium traitée.

Ainsi, la mise en contact de ladite membrane polymérique fluorée avec la surface de lithium métallique selon le procédé de l'invention est temporaire. Autrement dit, la membrane polymérique fluorée est retirée ensuite de la surface de lithium métal traitée et n'est pas destinée à demeurer au contact du lithium métallique. En particulier, la membrane polymérique fluorée n'est pas mise en oeuvre au niveau de la batterie au lithium, au sein de laquelle l'électrode de lithium métallique traitée par le procédé de l'invention est utilisée. Plus particulièrement, comme indiqué précédemment, l'étape (2) de mise en contact est suivie d'une étape (3) d'élimination de la membrane polymérique résiduelle, en particulier par simple décollement de la membrane.

Comme détaillé en exemple, la présence de LiF peut être vérifiée par analyse par spectrométrie de photoélectrons induits par rayons (XPS pour « X-ray photoelectron spectroscopy » en terminologie anglo-saxonne) ou par spectrométrie de masse d'ions secondaires à temps de vol (ToF-SIMS) de la surface traitée.

De manière avantageuse, la mise en contact du Li métal solide avec la membrane polymérique fluorée selon l'invention est réalisé à une température comprise entre la température ambiante (25°C) et 100°C, en particulier comprise entre 25°C et 90°C, et avantageusement à température ambiante (25°C).

De préférence, la mise en contact du Li métal solide avec la membrane polymérique fluorée selon l'invention est réalisée à pression atmosphérique.

De préférence, cette étape de mise en contact du Li métal solide avec la membrane polymérique fluorée selon l'invention est opérée sous atmosphère anhydre ou neutre, par exemple sous atmosphère d'hélium, de néon, d'azote ou d'argon.

La durée de mise en contact de ladite surface de Li métal solide avec ladite membrane polymérique fluorée peut être ajustée au regard notamment de la température de mise en oeuvre, pour obtenir l'épaisseur souhaitée de la couche de LiF.En particulier, la mise en contact de ladite surface de Li métal solide avec ladite membrane polymérique fluorée peut être maintenue pendant une durée d'au moins 5 minutes, en particulier comprise entre 5 minutes et 48 heures, notamment entre 1 et 32 heures, en particulier entre 12 et 24 heures.

L'étape (2) de mise en contact du Li métal solide avec la membrane polymérique fluorée selon l'invention est suivie d'une étape (3) d'élimination de la membrane polymérique résiduelle de la surface fluorée de Li métal.

Par membrane polymérique « résiduelle », on désigne la membrane polymérique à l'issue de l'étape (2) de mise en contact, autrement dit la membrane polymérique résultante du clivage d'au moins une partie des liaisons labiles C_{Ar}-F de la membrane polymérique fluorée au contact du lithium métal.

Ainsi, selon le procédé de l'invention, la membrane polymérique est totalement retirée de la surface du Li métal solide traitée.

De manière avantageuse, l'élimination de la membrane polymérique résiduelle peut être effectuée par simple décollement de la membrane polymérique. En particulier, l'élimination de la membrane polymérique résiduelle ne requiert aucun traitement thermique du lithium métal. De fait, la surface de lithium métallique traitée selon l'invention, après décollement de la membrane polymérique, ne présente aucune trace de polymère.

Selon une variante de réalisation, l'ensemble des étapes (2) et (3) est réalisé une seule fois. Selon une autre variante de réalisation, l'ensemble des étapes (2) et (3) peuvent être renouvelées au moins une fois à l'issue de l'étape (3). Dans cette variante, on élimine la membrane polymérique résiduelle, avant de procéder à l'application au niveau de la surface de lithium métallique, d'une nouvelle membrane polymérique fluorée.

Comme évoqué précédemment, de manière avantageuse, le procédé de l'invention conduit à la formation, au niveau de la surface de lithium métal traitée, d'une couche mince et dense de LiF.

De manière avantageuse, le procédé de l'invention permet d'accéder à une couche de LiF présentant une bonne homogénéité, en particulier d'épaisseur uniforme sur l'ensemble de la surface de lithium métal traitée, en particulier sur la totalité de la surface d'au moins ladite face de ladite électrode de lithium métallique.

En particulier, la couche de LiF obtenue selon l'invention peut présenter une épaisseur comprise entre 1 nm et 3 µm, en particulier entre 1 nm et 200 nm.

### APPLICATIONS

Comme indiqué précédemment, le procédé de fluoration selon l'invention permet avantageusement de préparer une électrode de lithium métallique protégée en surface par une couche de LiF. Plus particulièrement, il permet d'accéder à une électrode de lithium métallique présentant, au niveau de sa face destinée à être mise en contact avec l'électrolyte au sein d'une batterie au lithium, une couche de LiF.

Il est ainsi décrit une électrode de lithium métallique, en particulier destinée à former une électrode négative dans une batterie au lithium, ladite électrode présentant au niveau d'au moins l'une de ses faces, une couche de LiF obtenue à l'issue du procédé selon l'invention, tel que décrit précédemment.

Ladite électrode de lithium métallique peut plus particulièrement être accolée à un collecteur de courant, en particulier en cuivre, et présenter ladite couche protectrice de LiF en surface de sa face opposée au collecteur de courant.

Ladite électrode peut être avantageusement utilisée comme électrode négative dans une batterie au lithium, en particulier une batterie lithium-métal, la couche de LiF au contact de l'électrolyte assurant une stabilité améliorée au cyclage.

Il est décrit un élément électrochimique, dit encore générateur électrochimique ou accumulateur, au lithium, comportant au moins une électrode de lithium métallique, en particulier en tant qu'électrode négative, présentant une couche protectrice de LiF obtenue selon le procédé de l'invention.

Comme illustré dans les exemples qui suivent, la couche de LiF, formée selon le procédé de l'invention en surface de l'électrode de lithium et au contact de l'électrolyte au sein de l'élément électrochimique au lithium dans lequel elle est mise en oeuvre, permet de protéger efficacement l'électrode de lithium métallique au cours du cyclage et d'assurer une stabilité améliorée au cyclage.

Un élément électrochimique comprend de manière conventionnelle ladite électrode négative de lithium métallique, une électrode positive et un film d'électrolyte intercalé entre lesdites électrodes positive et négative. L'électrode négative de lithium métallique préparée selon l'invention présente, au niveau de sa face destinée à être au contact de l'électrolyte, une couche protectrice de LiF formée selon le procédé de l'invention.

L'électrode positive d'un élément électrochimique au lithium comprend généralement, en tant que matière électrochimiquement active, des composés lamellaires, tels que LiCoO₂, LiNiO₂ et mixtes Li(Ni, Co, Mn, Al)O₂, ou des composés de structure spinelle de compositions proches de LiMn₂O₄, des phosphates du lithium, en particulier LiMnFePO₄ ou LiFePO₄.

De manière avantageuse, l'électrode positive comprend, en tant que matière électrochimiquement active, du LiNi_{1/3}Mn_{1/3}Co_{1/3}O₂ ou du LiCoO₂, de préférence du LiNi_{1/3}Mn_{1/3}Co_{1/3}O₂.

Elle comprend également des collecteurs de courant, généralement en cuivre pour ladite électrode négative, ou en aluminium pour l'électrode positive, qui permettent la circulation des électrons, et donc la conduction électronique, dans le circuit extérieur.

L'électrode de lithium métallique présentant une couche protectrice de LiF peut être mise en oeuvre au contact de tout type d'électrolyte, en particulier se présentant sous forme liquide, gélifiée ou solide.

L'électrolyte sous forme liquide peut être plus particulièrement composé d'un sel de lithium dissous dans un milieu organique ou aqueux (classiquement dans des solvants carbonates, acétonitrile pour les batteries au lithium), en présence ou non d'additifs. Leur mise en oeuvre au sein d'un élément électrochimique au lithium s'accompagne de la mise en oeuvre d'un séparateur pour assurer une isolation électrique entre les électrodes positive et négative. L'électrolyte sous forme solide agit à la fois comme conducteur ionique et séparateur entre les électrodes positive et négative. Il peut être par exemple à base de polyéther(s), en particulier à base de poly(oxyéthylène) (POE) et /ou poly(oxypropylène) (PPO) dans lequel est dissous un sel de lithium.

Un élément électrochimique selon l'invention peut être plus particulièrement destiné à une batterie au lithium. Typiquement, une batterie comprend une pluralité d'éléments électrochimiques susceptibles d'être regroupés au sein d'une même enceinte. Une batterie peut être divisée en modules, chaque module étant composé d'une pluralité d'éléments électrochimiques reliés entre eux en série, en parallèle, en parallèle-série ou en sérieparallèle, réunis au sein d'un même conteneur formant l'enveloppe du module. La batterie est destinée à fournir de l'énergie électrique à une application extérieure. Un circuit de charge est généralement prévu auquel la batterie peut être branchée pour recharger les éléments. Un système de gestion comprenant des capteurs de mesures et un circuit électronique de contrôle, plus ou moins évolué selon les applications, peut être associé à la batterie.

Il est ainsi décrit un module de batterie, en particulier pour une batterie au lithium, comprenant une pluralité d'éléments électrochimiques tels que décrits précédemment. Les éléments électrochimiques au sein d'un module sont typiquement connectés électriquement, en série et/ou en parallèle. Chaque élément peut être équipé de dispositifs nécessaires à la connexion électrique avec les autres éléments du module, par exemple sous la forme de barrettes métalliques (busbar), de dispositifs de mesure des paramètres de fonctionnement de l'élément (température, tension, courant) et éventuellement de dispositifs de sécurité (soupape, opercule).

Il est également décrit une batterie au lithium, contenant un assemblage de modules tels que décrits précédemment, chaque module comportant plusieurs éléments électrochimiques tels que décrits précédemment, chacun des éléments électrochimiques intégrant une électrode négative au lithium présentant une couche protectrice de LiF formée selon le procédé de l'invention.

De manière avantageuse, il peut s'agir d'une batterie lithium-métal, en particulier comprenant au moins une électrode en lithium métallique présentant une couche de LiF formée selon le procédé de l'invention et une électrode comprenant du LiNi_{1/3}Mn_{1/3}Co_{1/3}O₂ ou du LiCoO₂, de préférence du LiNi_{1/3}Mn_{1/3}Co_{1/3}O₂.

Il peut encore s'agir d'une batterie lithium-soufre ou lithium-air.

L'invention va maintenant être décrite au moyen des exemples et figures suivants, donnés bien entendu à titre illustratif et non limitatif de l'invention.

### Exemple 1

### Traitement de fluoration selon l'invention d'une électrode de lithium métallique

Un traitement de fluoration selon l'invention a été réalisé sur une électrode de lithium métallique de 20 µm d'épaisseur sur un collecteur de courant de cuivre de 10 µm d'épaisseur.

### Préparation de la membrane de PPFS

Une membrane de PPFS est formée suivant le protocole suivant. Le PPFS est solubilisé dans du tétrahydrofurane ou du fluorobenzène à raison de 10 % massique. La solution est mélangée à chaud (50-80°C), jusqu'à l'obtention d'une solution translucide. Cette solution est ensuite laissée sous agitation revenir à température ambiante.

La solution est ensuite étalée sur un substrat en PET à l'aide d'une racle d'enduction, dont la hauteur est réglable (dans des conditions classiques, une épaisseur d'enduction de 100 µm est utilisée).

Le dépôt est ensuite laissé 5 minutes sur la table d'enduction sous Sorbonne pour laisser le temps à un maximum de solvant de s'évaporer. Le dépôt est ensuite laissé à sécher dans une étuve sous vide pendant au moins 1 heure à 55 °C.

La membrane de PPFS obtenue est laissée sur le film plastique de PET.

### Traitement de fluoration de l'électrode

La membrane de PPFS est mise en contact avec la surface de l'électrode de lithium métallique.

Pour améliorer la mise en contact entre les matériaux, l'ensemble constitué de l'électrode de lithium métallique et du film de PET porteur de la membrane de PPFS, est placé entre deux plaques de plastique, et une légère pression inférieure à 1 bar est appliquée *via* des poids. Les échantillons sont laissés en contact 24 heures à température ambiante en salle anhydre (salle à -40°C de point de rosée).

La membrane de PPFS portée par le film de PET est séparée de l'électrode de lithium métallique par simple décollement.

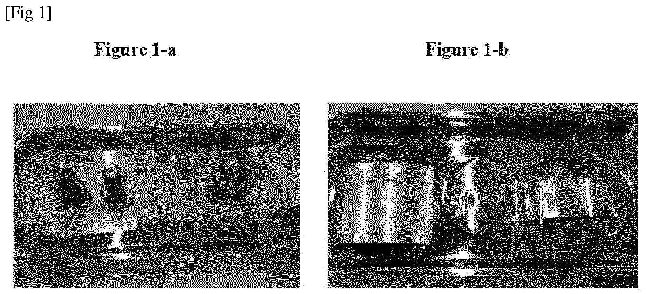

La figure 1 est une photographie des échantillons pressés sous des poids (figure 1-a), et des échantillons obtenus avant retrait de la membrane PPFS (figure 1-b).

### Analyse de la couche de LiF obtenue

Le résultat de l'opération de fluoration du lithium métallique par action de la membrane de PPFS peut être caractérisé par analyse par spectrométrie de photoélectrons induits par rayons (XPS pour « X-ray photoelectron spectroscopy » en terminologie anglo-saxonne).

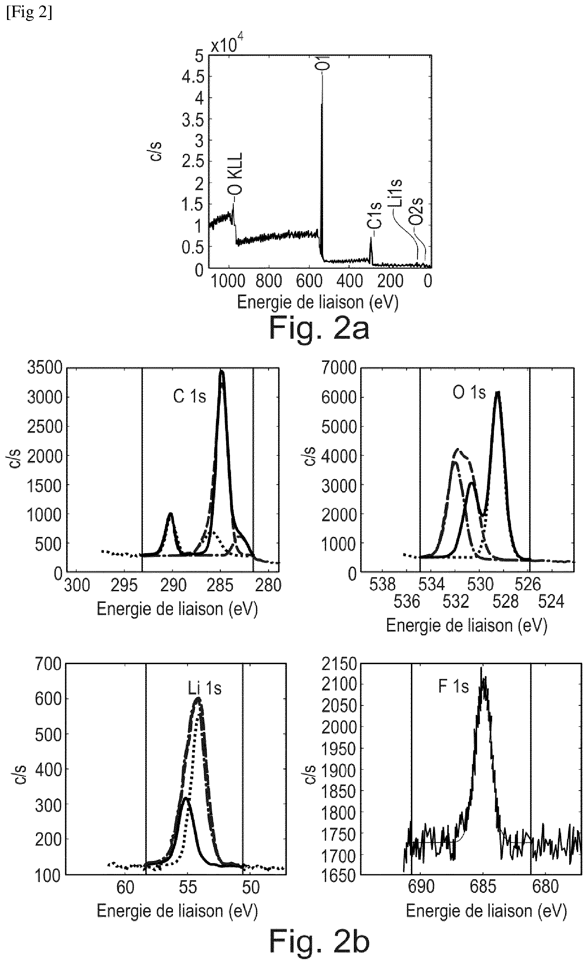

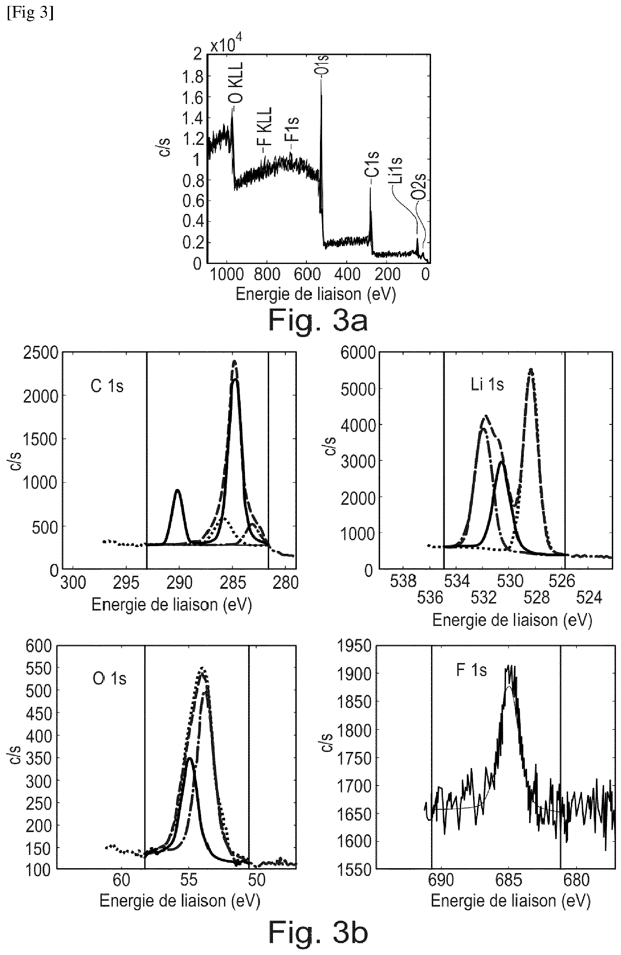

Sur les figures 2 et 3 sont présentés respectivement le spectre XPS de survol (figures 2-a et 3-a) et les spectres XPS de C1s, Lils, O1s et F1s (figures 2-b et 3-b) obtenus par analyse de deux zones distinctes de la surface de l'électrode après le traitement de fluoration.

Les différents tracés correspondent au « fitting » de la courbe (ou ajustement de courbe), c'est-à-dire que l'on reconstruit chaque type d'espèce qui est dans la couche d'un point de vue contribution au spectre obtenu pour en juger les pourcentages atomiques au global, en relatif les uns par rapport aux autres.

L'analyse XPS témoigne bien de la présence de LiF dans la zone d'énergie qui y est associée. Une analyse par spectrométrie de masse d'ions secondaires à temps de vol (ToF-SIMS) confirme également la présence d'une couche de LiF.

Ainsi, le procédé de l'invention est bien efficace pour créer une couche de LiF en surface du lithium métallique solide.

### Exemple 2

### Evaluation de l'efficacité des électrodes présentant une couche protectrice de LiF

L'influence de la formation de la couche protectrice de LiF sur l'efficacité de l'électrode est testée en pile bouton.

Les électrodes en lithium métallique fluorées de 20 µm d'épaisseur obtenues à l'issue du traitement de fluoration selon l'invention, comme décrit en exemple 1, sont montées en piles boutons symétriques.

Les piles boutons symétriques sont composées d'une membrane Osaka Soda (POE - LiTFSI) comme électrolyte, intercalée entre deux électrodes de lithium métallique fluorées identiques, la couche de LiF de chacune des électrodes étant positionnée au contact de l'électrolyte.

A titre de comparaison, des piles boutons ont été préparées à partir des mêmes électrodes de lithium métallique de 20 µm d'épaisseur (sur collecteur de cuivre), n'ayant pas subi de traitement de fluoration de surface (notées « Li 20 µm »).

### Mesure de spectroscopie d'impédance électrochimique

L'impédance des différentes cellules est mesurée à 60°C.

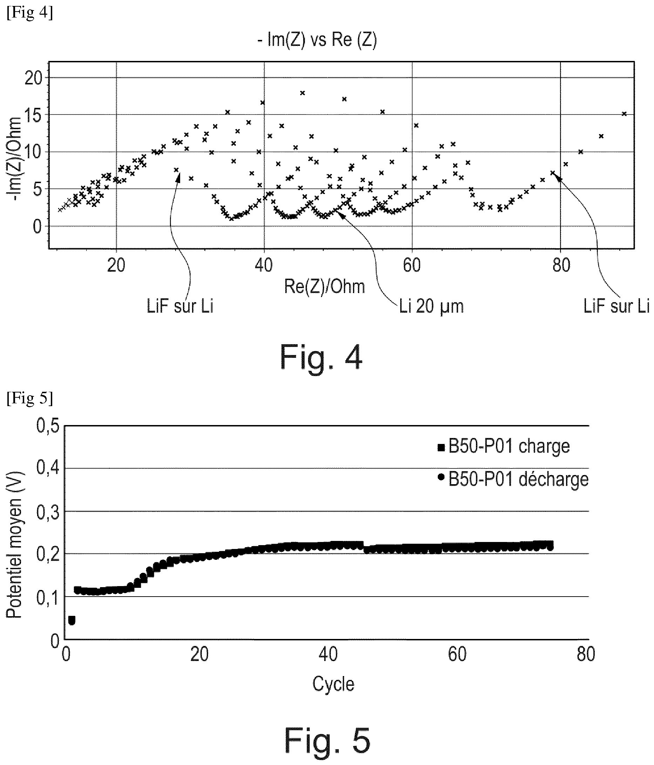

Les résultats de spectroscopie d'impédance pour les différentes piles boutons symétriques sont présentés en figure 4.

Sur cette figure, il peut être noté qu'après une fluoration à température ambiante, les spectres d'impédance montrent que la résistance en fin de boucle est quasiment la même ; et donc la résistance n'évolue que très peu malgré la présence de la couche de LiF. Ceci témoigne du fait que la présence de la couche de LiF n'impacte pas le fonctionnement global du système.

### Mesure en cyclage électrochimique

La pile bouton Li/Li a été testée en cyclage électrochimique afin de valider le bon fonctionnement de la pile dans ces conditions.

Les résultats de cyclage, en charge et décharge, à 60°C, avec une densité de courant de 0,3 mA/cm² et une capacité de 1 mAh/cm² sont présentés en figure 5.

La courbe de cyclage obtenue est homogène d'un point de vue du potentiel de travail avec des résultats de cellules lithium/lithium standards. Néanmoins, habituellement, le nombre de cycles effectués avant défaut est de l'ordre de 17. Dans le cas présent, la cellule est en défaut après 74 cycles, ce qui représente un réel avantage des électrodes en lithium fluorées selon l'invention par rapport au lithium pur.

Il est entendu que les électrodes de lithium fluorées pourraient également être mis en oeuvre avec des électrolytes liquides.

### Références

[1] Dingchang Lin et al., Nano Lett. 2017, 17, 3731-3737 ;
[2] Feihong Ren et al., Carbon 171 (2021) 894-906 ;
[3] Yong Jun Gong et al., Energy Environ. Sci., 2021, 14, 940-954 ;
[4] Jie Zhao et al., J. Am. Chem. Soc. 2017, 139, 11550-11558;
[5] Jung-Hun Lee et al., Journal of Energy Chemistry 62 (2021) 617-626;
[6] Zhe Peng et al., Nano Energy 39 (2017) 662-672 ;
[7] Andrzej Lewandowski et al., J Appl Electrochem (2013) 43 :367-374 ;
[8] Kavan et al., Journal of Fluorine Chemistry, 41 (1988) 383-391.

## Revendications

1. Procédé de formation de LiF au niveau d'une surface de lithium métallique dit « Li métal » solide, comprenant au moins une étape de mise en contact de ladite surface de lithium métallique solide, avec une membrane polymérique, dite membrane polymérique fluorée, formée à partir d'au moins un polymère, dit polymère fluoré, porteur de groupements pendants possédant au moins un cycle aromatique porteur de liaisons C-F labiles.

2. Procédé selon la revendication précédente, ledit procédé comprenant au moins les étapes consistant en :
(1) disposer d'un substrat présentant, au niveau d'au moins l'une de ses faces, une couche de Li métal solide ;
(2) mettre en contact la surface de ladite couche de Li métal solide avec ladite membrane polymérique fluorée, pendant une durée suffisante à la formation, sur ladite surface, de LiF ; et
(3) ultérieurement à l'étape (2), éliminer la membrane polymérique résiduelle de la surface traitée, en particulier par simple décollement de la membrane polymérique résiduelle de la surface fluorée de lithium métal.

3. Procédé selon l'une quelconque des revendications précédentes, dans lequel ledit polymère fluoré est porteur de groupements pendants comprenant, voire étant formés par, un groupe aryle partiellement fluoré ou perfluoré, de préférence perfluoré ; en particulier un groupe phényle perfluoré.

4. Procédé selon l'une quelconque des revendications précédentes, dans lequel ledit polymère fluoré présente une chaîne principale hydrocarbonée.

5. Procédé selon l'une quelconque des revendications précédentes, dans lequel ledit polymère fluoré comprend, voire est formé, des unités monomériques de formule (I) suivante : 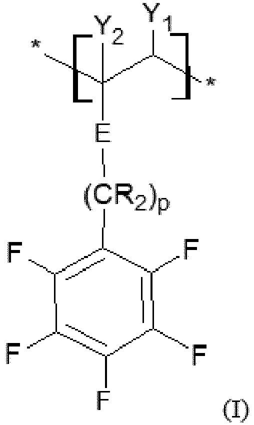 dans laquelle :
Y₁ et Y₂ représentent, indépendamment l'un de l'autre, un atome d'hydrogène ou un groupe C₁-C₄-alkyl, en particulier méthyle ; de préférence Y₁ représente un atome d'hydrogène et
Y₂ représente un atome d'hydrogène ou un groupe méthyle ;
E représente une liaison covalente ou un radical hydrocarboné, saturé ou insaturé, linéaire,
ramifié ou cyclique, aromatique ou non, comprenant éventuellement un ou plusieurs atomes d'oxygène et/ou d'azote ; en particulier E est choisi parmi
- une liaison covalente ;
- une liaison ester (-C(O)-O-) ou amide (-C(O)-NH-), en particulier une liaison ∘-C(=O)-O-□ ou ∘-C(=O)-NH-□, avec o représentant la liaison à la chaîne principale et □ la liaison au cycle benzénique ou au radical -(CR₂)ₚ- ; et
- un radical ∘-Ar-C(=O)-O-□ ou ∘-Ar-C(=O)-NH-□, avec Ar représentant un cycle aromatique, en particulier benzénique, o représentant la liaison à la chaîne principale et □ la liaison au cycle benzénique ou au radical -(CR₂)ₚ-;
R représentent, indépendamment les uns des autres, un atome d'hydrogène ou un atome de fluor, de préférence des atomes d'hydrogène, et
p vaut 0 ou est un entier compris entre 1 et 4.

6. Procédé selon la revendication précédente, dans lequel ledit polymère fluoré comprend, voire est formé, d'unités monomériques de formule (I) dans laquelle Y₁ représente un atome d'hydrogène ; Y₂ représente un atome d'hydrogène ou un groupe méthyle, E représente une liaison covalente et p vaut 0.

7. Procédé selon l'une quelconque des revendications précédentes, dans lequel le ou lesdits polymères fluorés de la membrane polymérique fluorée sont choisis parmi le poly(2,3,4,5,6-pentafluorostyrène), noté PPFS ; le poly(alpha-methyl-2,3,4,5,6-pentafluorostyrène ), le poly(1-allyl-2,3,4,5,6-pentafluorobenzène) ; le poly(pentafluorophényl acrylate) ; le poly(pentafluorophényl méthacrylate), le poly(pentafluorophényl 4-vinylbenzoate) ; et leurs mélanges ; en particulier parmi le poly(2,3,4,5,6-pentafluorostyrène), le poly(alpha-methyl-2,3,4,5,6-pentafluorostyrène ), le poly(1-allyl-2,3,4,5,6-pentafluorobenzène) et leurs mélanges ; et plus particulièrement ladite membrane polymérique fluorée est formée à partir de PPFS.

8. Procédé selon l'une quelconque des revendications précédentes, dans lequel ladite membrane polymérique fluorée est supportée par un substrat, en particulier un film en matière plastique, par exemple en polytétrafluroéthylène (PTFE), en polytéréphtalate d'éthylène (PET), de préférence en PET.

9. Procédé selon l'une quelconque des revendications précédentes, dans lequel ladite membrane polymérique fluorée présente une épaisseur comprise entre 10 µm et 300 µm, notamment entre 50 µm et 150 µm.

10. Procédé selon l'une quelconque des revendications 2 à 9, dans lequel ledit substrat en étape (1) est une électrode de lithium métallique, éventuellement accolée à un collecteur de courant, en particulier en cuivre.

11. Procédé selon l'une quelconque des revendications 2 à 10, dans lequel l'étape (2) de mise en contact est opérée en appliquant une pression sur au moins la face externe de la membrane polymérique fluorée, en particulier à l'aide d'un moyen mécanique tels que des poids positionnés sur la face externe de la membrane polymérique fluorée ou encore par pressage de l'ensemble formé du substrat présentant ladite couche de Li métal solide et de la membrane polymérique fluorée accolée, le cas échéant supportée par un substrat tel qu'un film en matière plastique.

12. Procédé selon l'une quelconque des revendications précédentes, dans lequel l'étape de mise en contact est opérée pendant une durée d'au moins 5 minutes, en particulier comprise entre 5 minutes et 48 heures, notamment entre 1 heure et 32 heures, en particulier entre 12 heures et 24 heures.

13. Procédé selon l'une quelconque des revendications précédentes, dans lequel l'étape de mise en contact est réalisée à une température comprise entre la température ambiante et 100°C, en particulier comprise entre 25°C et 90°C, et avantageusement à température ambiante ; et de préférence à pression atmosphérique.

14. Procédé selon l'une quelconque des revendications précédentes, dans lequel l'étape de mise en contact est opérée sous atmosphère anhydre ou neutre, par exemple sous atmosphère d'hélium, de néon, d'azote ou d'argon.

15. Utilisation du procédé de formation de LiF tel que défini selon l'une quelconque des revendications précédentes, pour former une couche protectrice de LiF en surface d'une électrode de lithium métallique, en particulier destinée à former l'anode dans une batterie au lithium, en particulier dans une batterie lithium-métal, lithium-soufre ou lithium-air.
